# EUROPEAN PATENT SPECIFICATION

(11) **EP 1 243 813 B1**
(45) Date of publication and mention of the grant of the patent: **17.08.2005**
(21) Application number: 01115961.3
(22) Date of filing: 29.06.2001
(51) Int. Cl.: F16G 15/12, F16G 13/00

(54) **Safety chain with enhanced section**
Sicherungskette mit verbessertem Querschnitt
Chaîne de sureté à section améliorée

(30) Priority: 22.03.2001 IT MI010610
(43) Date of publication of application: 25.09.2002
(73) Proprietor: MAGGI CATENE S.P.A., 23854 Olginate (LECCO) (IT)
(72) Inventor: Maggi, Corrado, Dr., 23896 Sirtori (IT); Belingheri, Massimo, 23826 Mandello Del Lario (IT)
(74) Representative: Faggioni, Marco, Dr. Ing.

(56) References cited:
- EP-A- 0 042 283
- DE-A- 1 803 240
- DE-A- 3 520 363
- GB-A- 2 114 262

## Description

The present invention concerns a safety chain.

As known, the safety chains are used in a miscellaneous heap of utilisations. A particularly interesting field, wherein opposite requirements lead the manufacturers of chains to do all they can with care and technological resources, is that of the safety chains for bicycles and motorcycles.

In this field, in fact, the theft is very common and therefore consumers are very interested to find a safety device that would be the most efficient possible, without an excessive cost making the purchase unjustified.

Up to now the market has offered various types of safety steel chains, adopting from time to time some little expedients - more or less efficacious and appreciated as well as considered useful by the consumers - apt to improve the "antitheft" performances.

Typically, the essential requirement for a safety chain is that of its strength to breaking, in particularly to cut. This requirement, which can be satisfied simply adopting a wide resisting section, finds an antithetical exigence on the fact that a chain shall be provided, wouldn't neither too heavy and bulky, nor scarcely flexible or handy, since it shall be transported and employed on a bicycle or motorcycle.

According to the prior art, hardened steel safety chains with square section links, have widely been used in the past (GB-A- 2 114 262).

Nevertheless, it was found that this kind of section can be easily cut by the jaws of a classical cutting nippers, usually employed from the thieves to cut the chain.

More recently, a safety chains with regular, hexagonal section appeared on the market: it is revealed that said section is more suitable to contrast the attack of a nippers, offering in fact a bigger surface to the jaws and therefore apt to better distribute the shearing pressure. That allowed to reduce the size and the minimum dimensions so that to obtain an advantageous reduction in the weight of the same chain.

However, the present Applicant believed that there would still be margins to obtain, through an inventive step, an improvement of the performances of the safety chains up to now available and therefore the Applicant invested resources and studies in the attempt to obtain a product even more efficient.

This inventive step, led out to a new safety chain with an original and particularly efficient section, as described in its essential features in the principal claim 1 enclosed.

Further features and advantages of the chain according to the invention, will become evident from the following detailed description of some preferred embodiments of the same, given as examples and showed in the enclosed drawings, wherein:

fig.1: shows an elevation view of a link of the chain according to the invention;

fig.2: shows a section view taken along the line II-II of fig.1;

fig.3: shows a partial enlarged view of the detail identified with the circle A in fig.2;

fig.4: shows a partial view in transversal section of a link according to the invention, laterally attacked by the jaws of a nippers;

fig.5: shows a view similar to that in fig.4, wherein the link is frontally attacked by the jaws of a nippers;

fig.6: shows a view similar to that in fig.1 of a second embodiment of the invention;

fig.7: shows a section view taken along the line VII-VII of fig.6 and:

fig.8: shows a partial enlarged view of the detail identified with the circle B in fig.7.

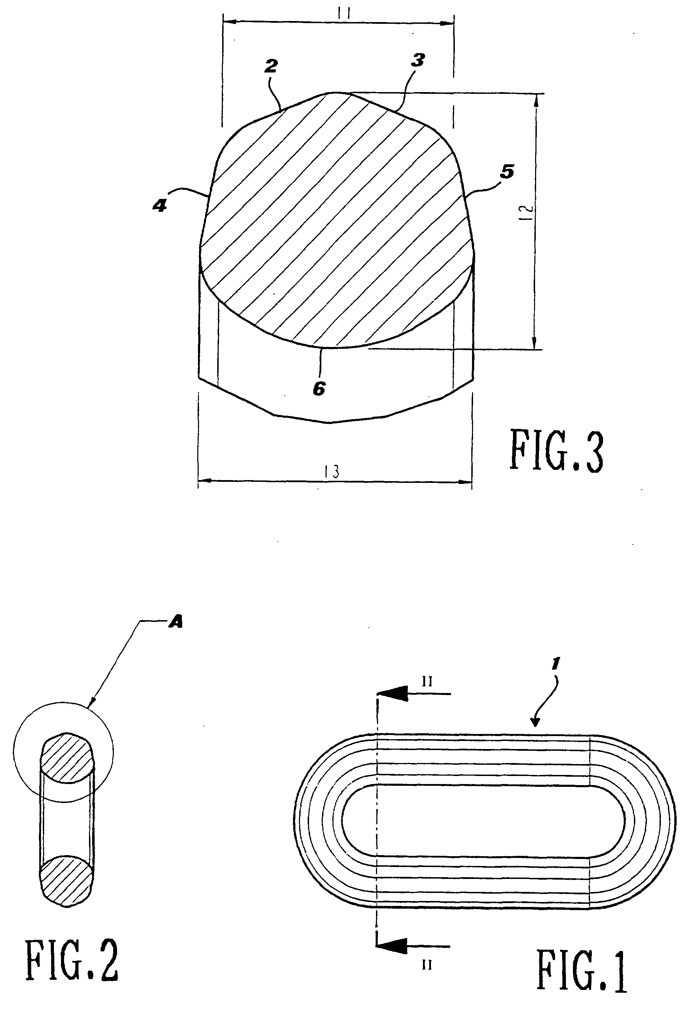

A safety chain comprises, in a way known per se, a set of rings or links, closed one on the other one, such as the one represented in fig.1. Links are preferably made of hardened steel, for example 20NiCrMo2.

According to the invention, the link 1 has a transversal section substantially of irregular, pentagonal shape (fig.3).

The profile of the section, in fact, is composed of two outwardly convergent sides 2 and 3, two lateral sides 4 and 5 respectively adjacent to the sides 2 and 3, and finally of an internal curved side 6 joining the lateral sides 4 and 5.

According to a first embodiment, the internal side 6 is curved with its concavity facing outwardly of the link and smoothly connected to the lateral sides 4 and 5.

The radius between sides 2-3-4 and 5 are all obtuse. In particular, these radius are such that the two lateral sides 4 and 5 are divergent, proceeding from the outward (the top of fig.3) onto the inwards (the bottom of fig.3) of the link 1.

This particular section has different advantages which make it particularly efficient to satisfy the requirements already exposed in the premises.

First of all, there is an increasing section proceeding from the outward onto the inwards which further prevents the possible cut of a nippers which frontally attacks the link.

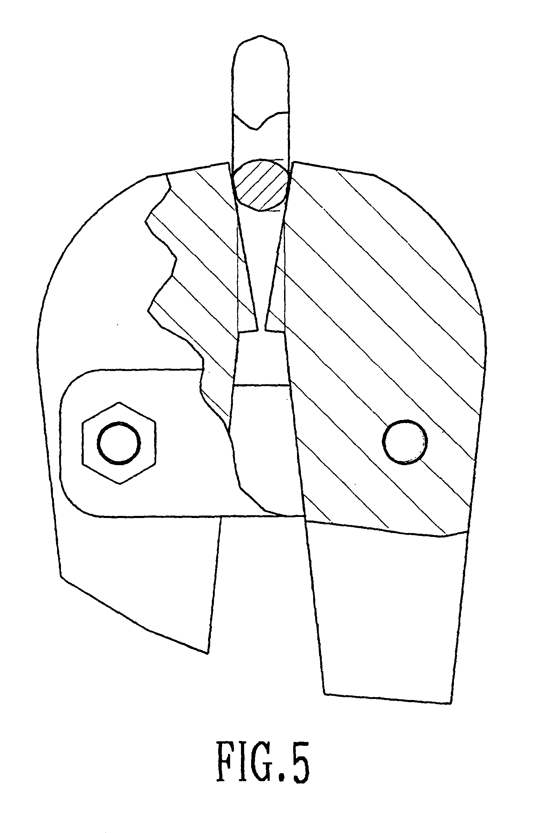

Moreover, it is to be considered that the divergent slope of the two lateral sides 4 and 5 is particularly suited to offer the maximum strength against the penetration of the jaws of a nippers in a frontal attack (fig.5): these two lateral sides, in fact, being substantially parallel to the jaw edges of the most common nippers, offer the maximum surface of attack and therefore the minimum shearing pressure.

Moreover, since the links are made of hardened steel, the jaws naturally tend to slide on the surface of the link, and the divergent slope of the lateral sides 4 and 5 further boosts this effect, resulting removing away the nippers from the link.

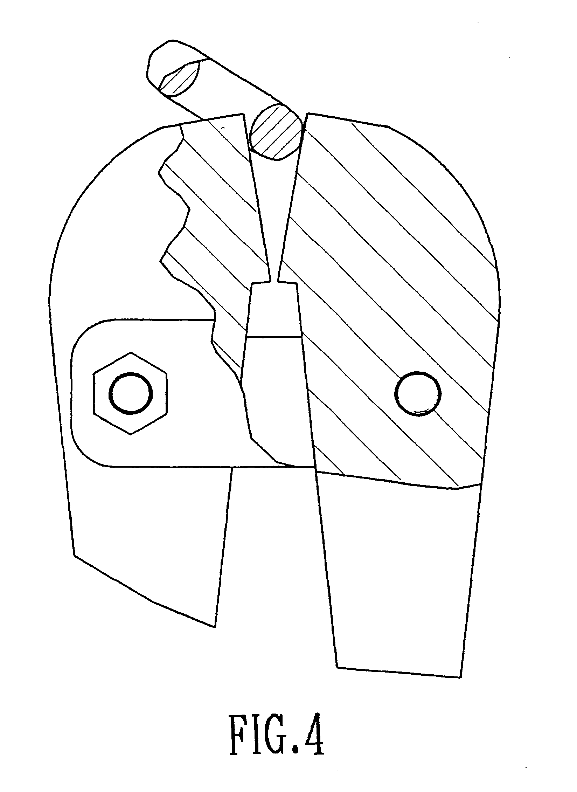

Moreover, the combination of the inclined external sides with the opposite internal curved side 6, makes difficult even the lateral attack of a nippers (fig.4). In fact, an external side (2 or 3) offers a wide surface to one of the two edges of the nippers, while the other edge hardly can bite the curved side 6, which slipts to the grip thanks to its roundness without any point of grip.

In terms of strength/weight ratio, the Applicant has then found some dimensions particularly advantageous, indicated in fig.3, such as 11x12x13mm.

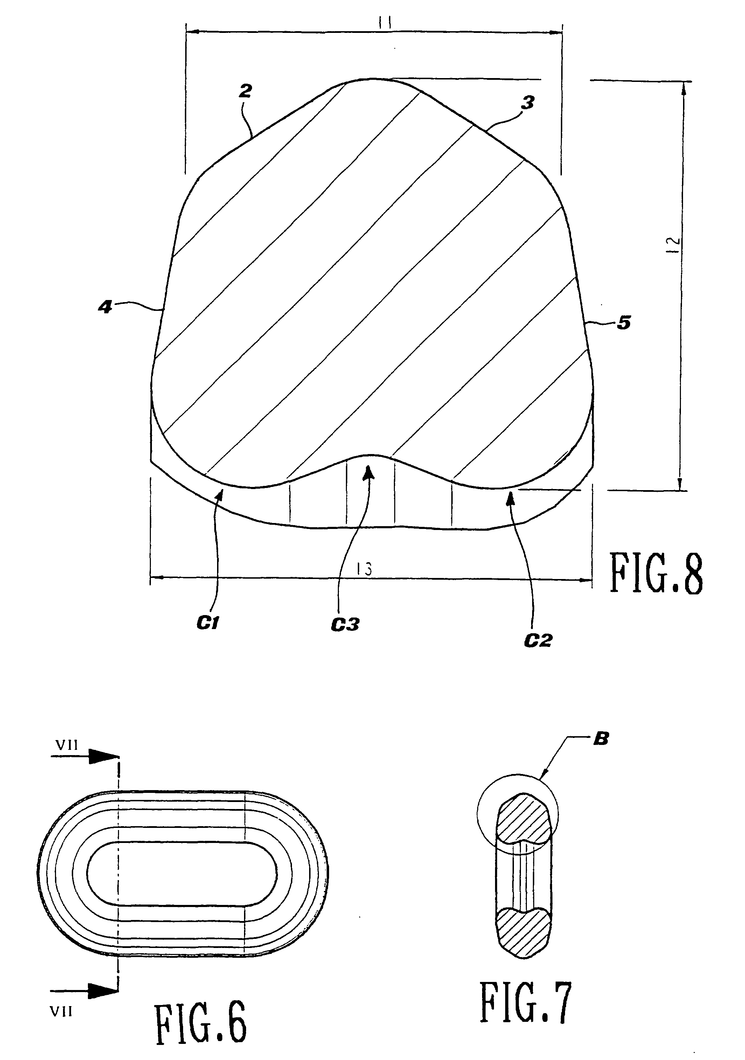

According to another embodiment shown in figs. 6 and 8, the internal side of the section has two concave portions C1 and C2, with whom it is connected to the lateral sides 4 and 5, and an intermediate convex portion C3. Here under it is meant that a portion of the internal side 6 is concave if its concavity is facing outwardly the link and convex if its concavity is facing inwardly.

The behaviour of the section according to this embodiment as far as its strength to the attack of a nippers is concerned, remains unchanged in comparison with the previously described embodiment, since the concave portions C1 and C2 sufficiently extend over the whole arc of surface which may be interested by the jaws of a nippers upon lateral attack (fig.4).

The convex portion C3 instead, extends over a portion which can not be reached by the nippers which are too bulky for entering within the ring of the link. Favourably, the convex portion C3 allows to locally reduce the section - with a beneficial effect on a reduction of weight - and to obtain a more complex and characteristic shape which could be even more appreciated by the consumers.

Even for this embodiment, the Applicant believes that the ideal and the most advantageous dimensions - tough not limiting - will be 11x12x13mm, as shown in fig. 8.

Thanks to the original and innovative features of the link section described, the safety chain according to the invention excellently attains the prefixed objects.

From testing carried out by the Applicant, it has been found that the chain according to the invention, offers in terms of strength/weight ratio, the best characteristics compared to the chains of prior art.

This result makes such product very attractive for the consumers from the point of view of the price, lightness and handling.

It is understood, however, that the invention is not limited to the particular embodiments above described, which only represent some not limiting examples of the invention, but a large number of variation are possible, all within the reach of a skilled person in the art, without departing from the scope of the same invention.

Finally it is to be noticed that, tough the sector of bicycle and motorcycle have been taken as sole reference in the description, the chain according to the invention also applies, with like advantages, to other fields.

## Claims

1. Safety chain with ring links, **characterized in that** the transversal section of the links is substantially pentagonal and it consists of two external sides (2 and 3), outwardly convergent of the link, two lateral sides (4,5) respectively adjacent to the said external sides and also outwardly convergent of the link, and internal side (6), located between said lateral sides and having at least a curved portion with a concavity facing outwardly of the link.

2. Safety chain as in claim 1, wherein said external sides and said lateral sides are symmetrical in respect of the central longitudinal plan of the link.

3. Safety chain as in claim 1 or 2 wherein the angles between the external sides and between each external side and the relative adjacent lateral side, are obtuse.

4. Safety chain as in any one of the previous claims, wherein the internal side (6) has two end portions (C1,C2), with a concavity facing outwardly of the link, and an intermediate convex portion (C3).

5. Safety chain as in any one of the previous claims, wherein said transversal section has sizes of 11 mm between the not contiguous ends of the external sides, 12 mm in the lateral dimension and 13 mm as maximum transversal dimension.

## Patentansprüche

1. Sicherheitskette mit Ringgliedern, **dadurch gekennzeichnet, daß** der Querschnitt der Glieder im wesentlichen fünfeckig ist und aus zwei äußeren Seiten (2 und 3) besteht, die außenseitig des Glieds konvergent verlaufen, zwei seitliche Seiten (4, 5), die jeweils benachbart zu den genannten äußeren Seiten angeordnet sind und ebenfalls außenseitig des Glieds konvergent verlaufen, und einer inneren Seite (6), die zwischen den genannten seitlichen Seiten angeordnet ist und zumindest einen gekrümmten Abschnitt mit einer Konkavität aufweist, die bezüglich des Glieds nach außen gerichtet ist.

2. Sicherheitskette nach Anspruch 1, **dadurch gekennzeichnet, daß** die genannten äußeren Seiten und die genannten seitlichen Seiten symmetrisch in Bezug auf die zentrale Längsebene des Glieds sind.

3. Sicherheitskette nach Anspruch 1 oder 2, **dadurch gekennzeichnet, daß** die Winkel zwischen den äußeren Seiten und zwischen jeder äußeren Seite und der dieser benachbarten seitlichen Seite stumpf sind.

4. Sicherheitskette nach einem der vorangehenden Ansprüche, **dadurch gekennzeichnet, daß** die innere Seite (6) zwei Endabschnitte (C1, C2) aufweist, mit einer Konkavität, die bezüglich des Glieds nach außen gerichtet ist, und mit einem dazwischen angeordneten konvexen Abschnitt (C3).

5. Sicherheitskette nach einem der vorangehenden Ansprüche, **dadurch gekennzeichnet, daß** der Querschnitt Abmessungen von 11 mm zwischen den nicht aneinander grenzenden Enden der äußeren Seiten, 12 mm in der seitlichen Abmessung und 13 mm als eine maximale Querabmessung aufweist.

## Revendications

1. Chaîne de sûreté ayant des maillons annulaires, **caractérisée en ce que** la section transversale des maillons est sensiblement pentagonale et consiste en deux côtés extérieurs (2, 3), convergeant vers l'extérieur du maillon, deux côtés latéraux (4, 5) adjacents respectivement auxdits côtés extérieurs et convergeant également vers l'extérieur du maillon, et un côté intérieur (6) placé entre lesdits côtés latéraux et ayant au moins une partie arrondie avec une concavité tournée vers l'extérieur du maillon.

2. Chaîne de sûreté selon la revendication 1, dans laquelle lesdits côtés extérieurs et lesdits côtés latéraux sont symétriques par rapport au plan longitudinal central du maillon.

3. Chaîne de sûreté selon la revendication 1 ou 2, dans laquelle les angles entre les côtés extérieurs et entre chaque côté extérieur et le côté latéral adjacent relatif sont obtus.

4. Chaîne de sûreté selon l'une quelconque des revendications précédentes, dans laquelle le côté intérieur (6) comporte deux parties extrêmes (C1, C2) avec une concavité tournée vers l'extérieur du maillon, et une partie convexe intermédiaire (C3).

5. Chaîne de sûreté selon l'une quelconque des revendications précédentes, dans laquelle ladite section transversale a des dimensions de 11 mm entre les extrémités non contiguës des côtés extérieurs, de 12 mm en dimension latérale et de 13 mm en dimension transversale maximale.
